# EUROPÄISCHE PATENTANMELDUNG

(11) **EP 1 096 642 A2**
(43) Veröffentlichungstag der Anmeldung: **02.05.2001**
(21) Anmeldenummer: 00123682.7
(22) Anmeldetag: 30.10.2000
(51) Int. Cl.: H02K 1/04

(54) **Isolierkörper mit Filmscharnier zur Polisolation**

(30) Priorität: 29.10.1999 DE 19952479
(71) Anmelder: WILO GmbH, D-44263 Dortmund (DE)
(72) Erfinder: Schreckenberg, Stephan, 44139 Dortmund (DE)
(74) Vertreter: COHAUSZ HANNIG DAWIDOWICZ & PARTNER

(57) **Zusammenfassung**

Elektrische Maschine, insbesondere Elektromotor, mit einem Stator, der von Statorwicklungen umwickelte Polschenkel und einen die Pole umgebenden Polring aufweist, wobei eine Statorwicklung vermittels eines einen Polschenkel umgreifenden und aus Kunststoff geformten Isolierkörpers am Stator anliegt, wobei der Isolierkörper 4 eine, veschwenkbar angebrachte Abdeckung 6 aufweist, mit der eine Seite der Statorwicklung 5 gegenüber dem Polring 2 und gegenüber der Statorwicklung 5 des benachbarten Poles 3 zumindest teilweise abdeckbar ist.

## Beschreibung

Die Erfindung betrifft eine elektrische Maschine, beispielsweise einen Elektromotor oder einen Generator, mit einem Stator, der von Statorwicklungen umwickelte Polschenkel und einen die Polschenkel umgebenden Polring aufweist, wobei eine Statorwicklung vermittels eines einen Polschenkel umgreifenden und aus Kunststoff geformten Isolierkörpers am Stator anliegt.

Generatoren und Elektromotoren mit derartigen Polisolationen verschiedener Ausführungsform sind hinlänglich bekannt. Dabei werden die Polisolationen benötigt, um die aus lackiertem Kupferdraht gewickelten Statorwicklungen nach Außen gegen Beschädigung zu schützen und damit Kurzschlüsse zwischen Drähten mit defekter Isolation und dem Stator zu vermeiden. Polisolationen sind damit für die Betriebssicherheit der Motoren unerläßlich. Zum Zwecke der Isolation ist es bekannt, die Statorwicklungen in Papier oder Folie einzuwickeln oder sie nach dem Wickeln mit einer Kunststoffschicht zu umgeben.

Es sind auch aus Kunststoff geformten Isolierkörper bekannt, die wie Hülsen über die Polschenkel gestreift und daraufhin bewickelt werden. Da diese Isolierkörper jedoch nicht die außen liegenden Lagen der Wicklung schützen, ist eine zusätzliche Verpackung notwendig, um die Luft- und Kriechstrecken zu vergrößern und dadurch Kurzschlüsse zu den entsprechenden benachbarten Bauteilen zu vermeiden.

Nachteilig an allen bislang bekannten Arten der Polisolierung ist, daß sie vollständig von Hand angebracht oder zumindest von Hand nachbearbeitet werden müssen. Eine solche händische und vergleichsweise anspruchsvolle Tätigkeit führt leicht zu Fehlern in der Isolation und trägt so zu einer Minderung der Betriebssicherheit bei. Außerdem führt die handwerkliche Arbeit zu einer erheblichen Verlangsamung und Verteuerung des Herstellungsprozesses.

Aufgabe der Erfindung ist es daher, eine elektrische Maschine mit von einer Polisolation umgebenen Polschenkeln zu schaffen, wobei sich die Polisolation bei einfachem Aufbau maschinell und damit kostengünstig anbringen läßt und dabei ein großes Maß an Betriebssicherheit gewährleistet.

Diese Aufgabe wird durch einen elektrische Maschine nach Anspruch 1 gelöst.

Der wesentliche Vorteil der Erfindung resultiert daraus, daß am Isolierkörper eine insbesondere flügelartige Abdeckung angebracht ist, mit dem sich die Statorwicklung gegenüber dem Polring bzw. gegenüber der benachbarten Wicklung zumindest teilweise abdecken läßt. Damit wird der Kontakt zum Polring und zur Nachbarspule effektiv unterbunden und so ein möglicher Kurzschluß mit der dadurch bedingten Gefahr eines Brandes wirksam verhindert. Im Hinblick darauf ist es besonders vorteilhaft, daß die Wicklung zumindest an den kritischen Stellen völlig vom erfindungsgemäßen Isolierkörper umschlossen ist. Durch die erfindungsgemäße Isolierung der Wicklung gegenüber dem umgebenden leitenden Material ist ein hohes Maß an Betriebssicherheit der elektrischen Maschine gewährleistet, wobei sich die Polisolation bei Motoren und Generatoren gleichermaßen einsetzen läßt.

Weiterhin ist es vorteilhaft, daß der Isolierkörper sich als Spritzteil aus einem insbesondere bei hohen Temperaturen von etwa 150°C beständigem Kunststoff einfach und preiswert herstellen und maschinell montieren läßt, ohne daß ein manuelles Eingreifen nötig wäre. Dabei bietet der starre Isolierkörper der Wicklung bei der Montage einen besonders guten Schutz vor mechanischer Beschädigung durch Ecken und Kanten des Stators. Damit werden durch den Isolierkörper die Herstellungskosten der Maschine gesenkt und der Ausschuß minimiert.

Auch wenn es möglich ist, einen starren und erfindungsgemäß durch eine Abdeckung seitlich geschlossenen Isolierkörper mit Nadelwicklern zu bewickeln, so ist es besonders vorteilhaft, die Abdeckung flügelartig verschwenkbar am Isolierkörper anzubringen. Damit kann die Abdeckung nach dem Bewickeln über die äußeren Lagen der Wicklung geklappt werden um diese zu schützen. Besonders einfach und damit vorteilhaft, läßt sich die verschwenkbare Aufhängung durch ein Filmscharnier realisieren, über welches das Abdeckteil am Isolierkörper befestigt ist. Das Filmscharnier ist dabei ein Abschnitt des Isolierkörpers mit einer besonders geringer Wandstärke von wenigen Zehntel Millimtern. Mit dem Filmscharnier läßt sich der Isolierkörper besonders vorteilhaft einstückig in nur einem Fertigungsschritt spritzen. Es ist jedoch auch möglich, die Abdeckung nach lokalem Erwärmen einer Falzstelle durch "thermisches" Biegen umzuklappen. Nach dem Erkalten verbleibt die Abdeckung in der entsprechenden Position.

In einer besonders vorteilhaften Ausführungsform bildet der Isolierkörper einen getrennt vom Stator maschinell mittels eines Spulenwicklers bewickelbaren Spulkörper für die Statorwicklung. Dabei ist es vorteilhaft, den Isolierkörper wie eine Garnrolle mit zwei Seitenwänden zu versehen, wobei die eine Seitenwand den Polring und die andere Seitenwand den Polschuh bedeckt. Es ist vorteilhaft, den Isolierkörper mit zwei Abdeckungen zu versehen, die auf die seitlichen Außenlagen der Wicklung geklappt werden, bevor der Isolierkörper auf den Polschenkel aufgeschoben wird. Die Zahl der Abdeckungen an einem Isolierkörper kann beliebig an die jeweiligen Gegebenheiten angepaßt werden. Dabei ist der Polschenkel vorteilhafterweise so ausgebildet, daß er, nachdem er mit der Wicklung versehen ist, vermittels einer Längsführung wie z.B. einer Schwalbenschwanzführung in den Polring eingeschoben werden kann.

Um einen besonders guten Schutz der Wicklung vor mechanischer Beeinträchtigung zu gewährleisten, ist es vorteilhaft, wenn die Abdeckung den Wickelraum des Spulkörpers von der Kante der einen Seitenwand bis zur Kante der anderen Seitenwand vollständig übergreift und damit die Wicklung abdeckt. Der Isolierkörper bildet somit zumindest bezüglich der axial ausgerichteten Längsseiten einen geschlossenen Körper. Um den geschlossenen Zustand zu sichern ist es vorteilhaft, wenn die Abdeckung an ihrer dem Filmscharnier gegenüberliegenden Kante ein Rastelement aufweist, mit dem es in der verschwenkten Position festsetzbar ist. Die Realisierung dieses Rastelementes kann entweder durch Form- oder durch Reibschluß der freien Kante der Abdeckung mit der gegenüberliegenden Seitenwand erfolgen.

Der erfindungsgemäße Stator läßt sich besonders vorteilhaft bei Elektromotoren einsetzen, die zum Antrieb eines Lüfters oder einer kleinen Kreiselpumpe vorgesehen sind. Auf diese Art kann die Zuverlässigkeit und die Betriebssicherheit der Pumpen unter Minimierung der Herstellungskosten verbessert werden. Außerdem ermöglicht der erfindungsgemäße Stator, der lagenweise und mit Draht großen Querschnittes bewickelbar ist, den Bau von Maschinen hohen Wirkungsgrades bei geringer Baugröße.

Eine Ausführungsform des Statorpaketes einer erfindungsgemäßen elektrischen Maschine ist in den Zeichnungen 1 und 2 dargestellt und wird im folgenden näher beschrieben. Es zeigen:
- **Figur 1**: einen radialen Schnitt durch ein Statorpaket und
- **Figur 2**: einen einzelnen Isolierkörper.

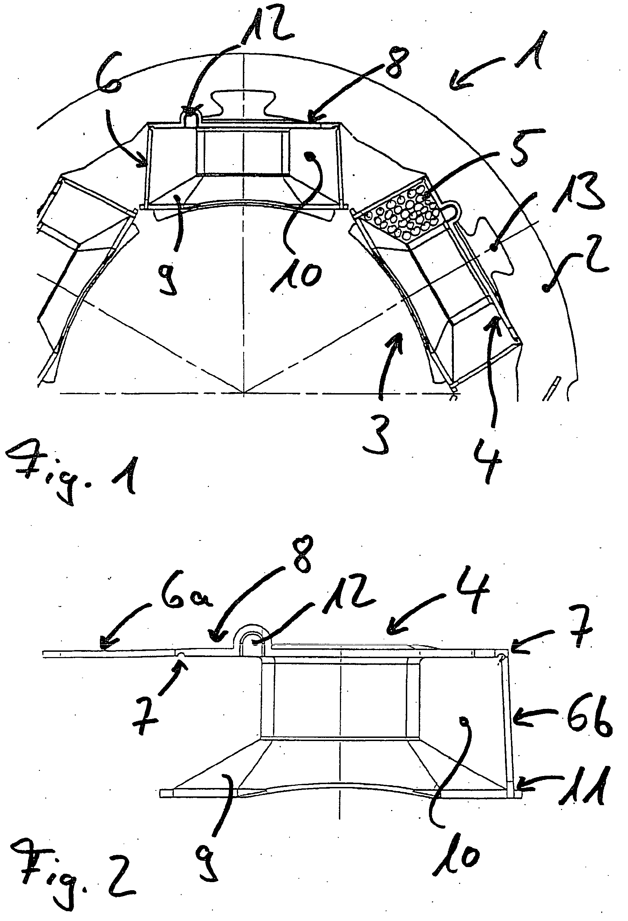

Die Figur 1 zeigt einen teilweisen Schnitt durch ein Statorpaket 1 eines Elektromotors mit einem zylindrischen Polring 2 der Polschenkeln 3 umgibt, wobei die Polschenkel 3 vermittels aus Kunststoff geformter und die Polschenkel 3 umgreifender Isolierkörper 4 (Figur 2) mit Wicklungen 5 umwickelt sind. Die Polschenkel 3 sind jeweils über eine axial angeordnete Schwalbenschwanzführung 13 mit dem Polring 2 verbunden. Die Isolierkörper sind derart ausgebildet, daß die Wicklungen 5 gegenüber dem Polring 2 und dem Polschenkel bedecken. Der Polring 2 ist ein Paket von ausgestanzten Ringblechen, die zu einem geschlossenen Zylinder aufeinander gestapelt sind. Wie der Polring 2, so ist auch jeder Polschenkel 3 aus einzelnen Polblechen zusammengefügt. Zu erkennen ist, daß die Wicklung lagenweise und ohne ungewollte Überkreuzungen gewickelt ist.

Der Isolierkörper 4 weist eine Abdeckung 6 auf, die vermittels eines Filmscharnieres 7 verschwenkbar am Grundkörper des Isolierkörpers 4 angeformt ist. Die Abdeckung 6 bedeckt in diesem Falle die Statorwicklung 5 gegenüber dem Polring 2 und gegenüber der Wicklung 5 des benachbarten Poles 3 wie aus Figur 1 ersichtlich ist.

In Figur 2 ist ein einzelner Isolierkörper 4 mit zwei Abdeckungen 6a und 6b dargestellt, wobei die Abdeckung 6a im Zustand der Fertigung des Isolierkörpers 3 und die Abdeckung 6b im abgeklappten Zustand dargestellt ist. Der Isolierkörper 4 bildet einen separat bewickelbaren Spulkörper für die Statorwicklung 5, der zwei an den Seiten der Statorwicklung 5 anliegende Seitenwände 8 und 9 aufweist, wobei die äußere Seitenwand 8 den Polring und die innere Seitenwand 9 den Polschuh bedeckt. Die Abdeckung 6 ist vermittels des Filmscharnieres an einer Außenkante der äußeren Seitenwand 8 angebracht und übergreift den Wickelraum 10 des Isolierkörpers 4 bis zur Außenkante der inneren Seitenwand 9. Dabei ist die Abdeckung 6 über ein Rastelement 11 in der verschwenkten Position festgesetzt.

Die in den Figuren gezeigten Isolierkörper 4 sind auf die Polschenkel 3 vor deren Montage am Polring 2 aufschiebbar. Jeder der Isolierkörper 4 weist in seiner Seitenwand eine als Rinne ausgebildete Leitstruktur 12 auf, über die das Ende der Wicklung 5 aus dem Stator herausführbar ist.

## Patentansprüche

1. Elektrische Maschine, insbesondere Elektromotor, mit einem Stator, der von Statorwicklungen umwickelte Polschenkel und einen die Pole umgebenden Polring aufweist, wobei eine Statorwicklung vermittels eines einen Polschenkel umgreifenden und aus Kunststoff geformten Isolierkörpers am Stator anliegt,
**dadurch gekennzeichnet**, daß
der Isolierkörper (4) eine Abdeckung (6) aufweist, mit der eine Seite der Statorwicklung (5) gegenüber dem Polring (2) und gegenüber der Statorwicklung (5) des benachbarten Poles (3) zumindest teilweise abdeckbar ist.

2. Maschine nach Anspruch 1,
**dadurch gekennzeichnet**, daß die Abdeckung (6) verschwenkbar am Isolierkörper (4) angebracht ist.

3. Maschine nach Anspruch 2,
**dadurch gekennzeichnet**, daß die Abdeckung (6) mittels eines Filmscharnieres (7) am Isolierkörper (4) angebracht, insbesondere angeformt, ist.

4. Maschine nach einem der vorherigen Ansprüche,
**dadurch gekennzeichnet**, daß die Abdeckung (6) thermisch verbiegbar ist.

5. Maschine nach einem der vorherigen Ansprüche,
**dadurch gekennzeichnet**, daß der Isolierkörper (4) einen separat bewickelbaren Spulkörper für die Statorwicklung (5) bildet, der zwei die Seiten der Statorwicklung (5) einfassende Seitenwände (8,9) aufweist.

6. Maschine nach Anspruch 5,
**dadurch gekennzeichnet,** da**ß** die Abdeckung (6) an einer Außenkante einer Seitenwand (8) angebracht ist.

7. Maschine nach Anspruch 6,
**dadurch gekennzeichnet**, daß die Abdeckung (6) den Wickelraum (10) des Isolierkörpers (4) von der einen Seitenwand (8) bis zur Außenkante der anderen Seitenwand (9) übergreift.

8. Maschine nach einem der vorherigen Ansprüche,
**dadurch gekennzeichnet**, daß die Abdeckung (6) ein Rastelement (11) aufweist, mit dem es in der verschwenkten Position festsetzbar ist.

9. Maschine nach einem der vorherigen Ansprüche,
**dadurch gekennzeichnet**, daß der Isolierkörper (4) und die Abdeckung (6) einstückig aus einem bei etwa 150°C temperaturbeständigen Kunststoff gefertigt, insbesondere gespritzt sind.

10. Maschine nach einem der vorherigen Ansprüche,
**dadurch gekennzeichnet**, daß der Isolierkörper (4) zwei Abdeckungen (6a,6b) aufweist, mit denen je eine Seite der Statorwicklung (5) abdeckbar ist.

11. Maschine nach einem der vorherigen Ansprüche,
**dadurch gekennzeichnet,** daß der Isolierkörper (4) auf einen Polschenkel (3) aufschiebbar ist.

12. Maschine nach einem der vorherigen Ansprüche,
**dadurch gekennzeichnet**, daß der Isolierkörper (4) eine Leitstruktur (12) aufweist, über die das Ende der Wicklung (5) abführbar ist.

13. Verwendung einer elektrischen Maschine nach einem der vorherigen Ansprüche als Elektromotor zum Antrieb eines Lüfters oder einer Kreiselpumpe.
